# EUROPÄISCHE PATENTSCHRIFT

(11) **EP 1 261 248 B1**
(45) Veröffentlichungstag und Bekanntmachung des Hinweises auf die Patenterteilung: **17.09.2003**
(21) Anmeldenummer: 01919155.0
(22) Anmeldetag: 28.02.2001
(51) Int. Cl.: A01D 41/14

(54) **VORRICHTUNG ZUR BODENKOPIERUNG FÜR VORSATZGERÄTE AN ERNTEMASCHINEN**
GROUND-SURFACE ADAPTATION DEVICE FOR ATTACHMENTS ON HARVESTING MACHINES
DISPOSITIF POUR LA REPRODUCTION DU SOL DESTINE A DES OUTILS ADAPTABLES DE MOISSONNEUSES

(30) Priorität: 09.03.2000 DE 10011499
(43) Veröffentlichungstag der Anmeldung: 04.12.2002
(73) Patentinhaber: Case Harvesting Systems GmbH, 01844 Neustadt (DE)
(72) Erfinder: VON ALLWÖRDEN, Wilhelm, 01326 Dresden (DE); VOSS, Lothar, 01844 Neustadt (DE)
(74) Vertreter: Müller, Lutz
(86) Internationale Anmeldenummer: DE0100785
(87) Internationale Veröffentlichungsnummer: WO01065918

(56) Entgegenhaltungen:
- AU-A- 2 108 067
- BE-A- 773 297
- DE-A- 1 757 007
- DE-A- 2 461 115
- DE-A- 19 601 420
- FR-A- 2 190 338
- FR-A- 2 246 220
- US-A- 3 646 738
- US-A- 4 147 016
- US-A- 4 942 724

## Beschreibung

Die Erfindung betrifft eine Vorrichtung zur Bodenkopierung für Vorsatzgeräte an Erntemaschinen, insbesondere für Schneidwerke bzw. Mähwerke an selbstfahrenden Mähdreschern und Feldhäckslern, nach den Merkmalen im Oberbegriff des Patentanspruchs 1.

Vorrichtungen zur Bodenkopierung dienen zur Anpassung der Vorsatzgeräte an Bodenunebenheiten, damit das Erntegut auch unter diesen Bedingungen verlustfrei geerntet werden kann. Dazu ist es hinlänglich bekannt, die Vorsatzgeräte verschwenkbar an der Erntemaschine anzubringen, so daß sie einmal um eine quer zur Fahrtrichtung ausgerichtete Achse die sogenannte Bewegung des Längskopierens und zum anderen um eine in Fahrtrichtung zeigende Achse die Bewegung des Querkopierens ausführen können. Die Anwendungsfälle von solchen Vorrichtungen zur Bodenkopierung erstrecken sich auf Schneid- bzw. Mähwerke sämtlicher Bauarten und auf Aufsammelvorrichtungen an den verschiedensten Erntemaschinentypen. Sie sind deshalb so notwendig geworden, weil alle diese Vorsatzgeräte durch die sehr große Leistungsfähigkeit der heutigen Erntemaschinen eine dementsprechend große Arbeitsbreite haben müssen. Die meisten Vorrichtungen zur Bodenkopierung sind heute mit einer Meßeinrichtung ausgestattet, die kontinuierlich den Abstand zwischen dem Boden und dem Vorsatzgerät mißt und regelnd auf die Längs- und/oder Querkopierung Einfluß nimmt.
Die einfachste Form einer derartigen Meßeinrichtung ist in der EP 0 331 893 B1 gezeigt, die in dem Fall ausschließlich für das Querkopieren vorgesehen ist. Dazu ist das Vorsatzgerät an seinen beiden Seitenwänden im Bereich des Mähbalkens mit federelastischen Gleitbügeln ausgestattet, die den Boden abtasten und über ein mit ihnen verbundenes Potentiometer ein Abstandsmaß des Vorsatzgerätes zum Boden liefern. In einer anderen Ausführungsvariante ist die Meßeinrichtung am Träger eines flexiblen Mähbalkens angebracht, indem deren Abtastkufen an Führungsarmen schwenkbar gelagert sind. Die Schwenkstellung der Führungsarme wird durch Tastarme auf eine Verbindungswelle übertragen und deren Drehwinkel wiederum über ein Übertragungsgestänge auf das Potentiometer. Wenn sich die Abstandsmaße beider Seiten unterscheiden, werden zwei Hydraulikzylinder mit Druck beaufschlagt, die in einer vertikalen Ausrichtung zwischen beispielsweise dem Zuführschacht eines Mähdreschers und dem Vorsatzgerät angebracht sind, die das Vorsatzgerät solange seitlich verschwenken, bis auf beiden Seiten des Vorsatzgerätes das gleiche Abstandsmaß wieder hergestellt ist.
An dieser Vorrichtung zur Bodenkopierüng ist zu bemängeln, daß sie den Bodenunebenheiten nicht schnell genug folgen kann, weil das Abstandsmaß erst in dem Augenblick gemessen wird, wo sich das Vorsatzgerät schon bewegen müßte. Weil aber die Bewegungsmechanismen für die Vorsatzgeräte an Erntemaschinen heute ausnahmslos hydraulisch betätigt werden, die zwangsläufig mit einer gewissen Trägheit behaftet sind, senkt sich das Vorsatzgerät nicht schnell genug in eine Bodensenke bzw. es kollidiert mit Bodenerhebungen. Dadurch sind insbesondere bei höheren Fahrgeschwindigkeiten im ersten Fall Erntegutverluste und im zweiten Fall Zerstörungen des Vorsatzgerätes die Folge.
Eine zweite Ausführungsmöglichkeit einer Meßeinrichtung in einer Vorrichtung zur Bodenkopierung ist in der EP 0 748 153 B1 vorgestellt, wobei beidseitig in den Seitenwänden im Bereich des Mähbalkens Ultraschallsensoren angebracht sind, die kontinuierlich den Abstand des Vorsatzgerätes zum Boden messen und ein dementsprechendes Ausgangssignal erzeugen. Im Fahrerhaus dieser Erntemaschine ist ein Regelgerät installiert, das die Ausgangssignale der Ultraschallsensoren empfängt und im Falle einer Abweichung von einem vorgegebenen Sollwert ein Regelventil im Hydraulikkreislauf der Hydraulikzylinder zum Anheben und Absenken des Vorsatzgerätes beaufschlagt. Da die Ultraschallsensoren an der gleichen Stelle wie die Gleitbügel in der EP 0 331 893 B 1 angeordnet sind und der Bewegungsmechanismus für das Vorsatzgerät ebenfalls hydraulisch betätigt ist, gelten natürlich auch hier die gleichen Nachteile. Sie wirken sogar noch verstärkt, da das gemessene Abstandsmaß in dem Fall zur Längskopierung mit den noch träger reagierenden großen Hydraulikzylindern zum Anheben und Absenken des Vorsatzgerätes genutzt wird. Einen zusätzlichen Störfaktor stellen noch die Ultraschallsensoren selbst dar, weil sie nicht zwischen auf dem Boden liegenden Pflanzen bzw. Stoppeln und dem Boden unterscheiden können, so daß sie bei diesen Bedingungen falsche Abstandsmaße liefern. Durch ihre Anordnung kurz über dem Boden macht sich dieser Fehler natürlich besonders negativ bemerkbar. Außerdem reagieren Ultraschallsensoren auf Wind und Feuchtigkeit mit einer größen Streuung der Meßwerte. Darüber hinaus sind sie relativ teuer in der Anschaffung, so daß alle diese Nachteile zusammengenommen sicher der Grund dafür sind, daß sich eine derartige Vorrichtung zur Bodenkopierung bis heute in der Praxis nicht durchsetzen konnte.

Ausgehend von den negativen Erkenntnissen aus vorstehend beschriebener Lösung ist eine weitere Meßeinrichtung für eine Vorrichtung zur Bodenkopierung mit der EP 0 511 768 B1 und der EP 0 936 475 A1 bekannt geworden, wo die dort eingesetzten Ultraschallsensoren ein Stück über den oberen Seitenwänden des Vorsatzgerätes und somit in einer großen Höhe über dem Boden angebracht sind. Damit wird lediglich erreicht, daß der Meßfehler für das Abstandsmaß durch Stoppeln bzw. auf dem Boden liegende Pflanzen prozentual etwas verringert wird.

Eine weitere Meßeinrichtung für eine Vorrichtung zur Bodenkopierung mittels Ultraschallsensoren ist in der EP 0 765 594 A1 am Beispiel eines Mähdrescherschneidwerks beschrieben. Dort messen hinten an der Rückwand des Schneidwerks angebrachte Ultraschallsensoren kontinuierlich den Abstand zu den Tastkufen, die unter dessen Seitenwänden angeordnet sind. Dazu ist an den Tastkufen eine quer zur Strahlungsrichtung der Ultraschallsensoren ausgerichtete Platte befestigt, um die Fehler aus der Bodenabtastung auszuschließen. Diese Maßnahme allein ist jedoch für eine gut funktionierende Bodenkopierung nicht ausreichend, da auch hier das Abstandsmaß zu spät mit den bereits erläuterten Nachteilen gemessen wird. Außerdem ändert sich der Auftreff- und Abstrahlwinkel zur Platte ständig, so daß Verfälschungen fiir das Abstandsmaß auftreten.
Analog zu bewerten ist die Meßeinrichtung für die Bodenkopierung nach der DE 196 01 420 A1, wo ein vorgespanntes Gleitelement aus schmalem Federstahl den Boden abtastet und seine Bewegung infolge von Bodenunebenheiten auf ein Signalübertragungsglied überträgt. Dieses ist als parallelogrammartiges Gestänge ausgebildet, am dem auch eine Platte befestigt ist, die im Unterschied zur vorstehend beschriebenen Platte an der Tastkufe durch das Parallelogramm annähernd parallele Bewegungen ausführt. Sie wird von einem Wellensensor angestrahlt und reflektiert dessen Strahlung. Der Wellensensor ermittelt daraus ein Maß für die Lageveränderung des Gleitelements, das in einem direkt proportionalen Verhältnis zum Abstandsmaß des Vorsatzgerätes vom Boden steht. Dieses so ermittelte Maß mit einer etwas größeren Genauigkeit wird aber letztendlich auch aufgrund des Ortes der Anbringung der Meßeinrichtung zu spät ermittelt. Einen zusätzlichen Mangel verursachen die schmalen Gleitelemente beim Vorhandensein von Längsrillen im Boden, weil sie dann ein falsches Abstandsmaß signalisieren.

Eine andere Ausführungsvariante einer Vorrichtung zur Längskopierung ist in der US 3,722,193 beschrieben, bei der an den Seitenwänden des Vorsatzgerätes höhenbewegliche Halmteiler befestigt sind, die mittels ihrer Gleitkufen das Bodenprofil abtasten. Dazu befinden sich deutlich über dem Messerbalken des Vorsatzgerätes an jeder Seitenwand horizontal und quer zur Fahrtrichtung der Erntemaschine ausgerichtete Achsen, um die die Halmteiler mit ihren hinteren Enden Schwenkbewegungen ausführen können. Die Halmteiler selbst erstrecken sich von da aus in Fahrtrichtung gesehen zuerst nach vom und unten und danach nur noch in einer horizontalen Ausrichtung nach vorn. Deren Schwenkbewegungen werden von gelenkig miteinander verbundenen Hebeln auf einen an einer Seitenwand befestigten Stellungssensor übertragen, dessen elektrische Signale an das Magnetventil für die Hydraulikzylinder zum Heben bzw. Senken der Zuführeinrichtung weiterleitet werden. Obwohl mit dieser Vorrichtung die Signale durch Einbeziehung der in Fahrtrichtung gesehen weit vorn angeordneten Halmteiler eher erzeugt werden, verbleibt noch der Mangel, daß sie sich aufgrund ihrer Gestalt und der gewählten Anbringung am Vorsatzgerät schon beim Auftauchen von mittleren Bodenerhebungen von selbst in den Boden eingraben. Dieser Effekt wird noch bei der Arbeit mit einem relativ weit ausgehobenen Vorsatzgerät verstärkt, weil dann die Halmteiler nach vorn abkippen und sich dadurch nicht mehr in einer parallelen Position zum Bodenprofil befinden, so daß sie mit ihren Spitzen in den Boden leicht einspießen.

Abschließend soll noch auf einen Pflanzenpositionierer zur Ernte von Bohnen nach der US 3,646,738 hingewiesen werden, der am Vorderteil eines Trägerfahrzeuges angebracht ist. Dort kommt eine parallelogrammartige Aufhängung zum Einsatz, deren unterer Hebel von der Einrichtung zum Anheben herabhängender Bohnenstengel und der Weiterleitung der Pflanzen an die Einrichtungen zum Abpflücken der Bohnen gebildet wird. Die sich in einer annähernd vertikalen Richtung von da aus nach oben erstreckenden vorderen und hinteren Schwenkhebel des Parallelogramms sind an Schwenkpunkten am Trägerfahrzeug befestigt. Der in Fahrtrichtung gesehene hintere Schwenkpunkt ist lagefixiert und der vordere kann entweder mittels eines Hydraulikzylinders oder mit einer längenveränderlichen Kette gegenüber dem Boden in der Höhe eingestellt werden. Die spezielle Dimensionierung des so gebildeten Parallelogramms bewirkt beim Zusammenstoß der Einrichtung zum Anheben und Führen der Bohnenpflanzen mit einem Hindernis, daß die sich ein Stück nach hinten verschiebt und dabei gleichzeitig ihr Vorderteil vom Boden etwas abhebt. Durch die lediglich manuelle Möglichkeit zur Höheneinstellung ist diese Einrichtung zur Anpassung von Vorsatzgeräten an Bodenunebenheiten nicht geeignet.

Deshalb liegt der Erfindung die Aufgabe zugrunde, eine Vorrichtung zur Bodenkopierung für Vorsatzgeräte an Erntemaschinen zu schaffen, die mit einer das Abstandsmaß zwischen dem Boden und dem Vorsatzgerät ermittelnden Meßeinrichtung ausgestattet ist, die den Meßwert zu einem solchen Zeitpunkt liefert, daß die Vorrichtung zur Bodenkopierung exakt dem Bodenprofil folgen kann, die unter allen Bedingungen genaue Meßwerte liefert, die dem Bodenprofil auch bei erheblichen Schwankungen störungsfrei folgt und die kostengünstig herstellbar ist.

Diese Aufgabe wird gemäß der Erfindung durch die Merkmale des Patentanspruchs 1 gelöst, wobei in den Unteransprüche Merkmale aufgeführt sind, die diese Lösung in vorteilhafter Weise weiterentwickeln.
Durch die höhenverschwenkbare Anbringung der Zuführeinrichtung an der Erntemaschine mittels leistungsstarker Hydraulikzylinder ist auch das Vorsatzgerät in dieser Richtung mit bewegbar, weil es frontseitig an der Zuführeinrichtung angehängt ist. Die Bewegung dieser Hydraulikzylinder wird dabei von einem Regler gesteuert, der von einer Meßeinrichtung Steuersignale empfängt, die sich in Abhängigkeit vom Abstandsmaß des Vorsatzgerätes vom Boden verändern. Im Regler ist dazu ein einstellbares Soll- Abstandsmaß gespeichert, mit dem das Ist- Abstandsmaß ständig verglichen und umgehend auf das Soll- Abstandsmaß nachgeregelt wird. Da alle Hydrauliksysteme aufgrund ihres Funktionsprinzips mehr oder weniger träge reagieren, wird die erfindungsgemäße Meßeinrichtung von einem auf dem Boden gleitenden und gegenüber dem Vorsatzgerät höhenbeweglichen Halmteiler gebildet, der mit einem elektrische Signale erzeugenden Sensor gekoppelt ist. Weil sich Halmteiler zur Erfüllung ihrer Funktion bekanntlich in Fahrtrichtung der Erntemaschine gesehen deutlich vor der Stelle im Vorsatzgerät befinden, die dessen funktionswichtiges Abstandsmaß definiert, sorgt die so bewußt erzeugte vorzeitige Signalgewinnung für den Ausgleich der Trägheit des Hydrauliksystems. Im beispielhaften Anwendungsfalle einer derartigen Vorrichtung zur Bodenkopierung an einem Schneidwerk für einen Mähdrescher bzw. an einem Mähwerk für einen Feldhäcksler oder einen Schwadmäher ist damit eine gleichmäßige Schnitthöhe zu realisieren.
Durch die Ausbildung des Halmteilers in seinem hinteren Teil in Form von je einem Oberlenker und einem Unterlenker, die sich in einem gewissen Abstand voneinander in horizontaler Ausrichtung nach vorn erstrecken und mit ihren hinteren Enden gelenkig am Vorsatzgerät befestigt sind, und durch die Verbindung ihrer vorderen Enden mittels einer Koppel ist ein höhenverschwenkbares Parallelogramm entstanden. Das sorgt dafür, daß der vordere Teil des Halmteilers mit seiner Gleitkufe und dem Abweiser über eine relativ große Höhenbewegung eine weitestgehend parallele Bewegung zum Boden ausführt, ohne in diesen einzuspießen.

Durch die Befestigung des mit dem Halmteiler verbundenen Sensors an der Seitenwand des Vorsatzgerätes und die gelenkige Verbindung seines Schwenkhebels mit einem Verbindungsglied, das anderenends gelenkig mit einem am Unterlenker oder am Oberlenker verdrehfest angebrachten Übertragungshebel in Verbindung steht, ist eine direkt proportionale Übertragung der Höhenbewegung des Halmteilers ohne Zeitverzögerung auf den Sensor möglich. Der zum Einsatz kommende Winkelsensor ist darüber hinaus Gewähr fiir das Messen sehr genauer Abstandsmaße für das Vorsatzgerät zum Boden. Dabei hat es sich als zweckmäßig erwiesen, wenigstens an jeder Seitenwand des Vorsatzgerätes eine Meßeinrichtung anzubringen, weil so neben dem Längskopieren des Vorsatzgerätes durch Verändern seiner Aushubhöhe auch das Querkopieren unter Einhaltung des Soll- Abstandsmaßes über die Breite des Vorsatzgerätes gesehen verwirklicht werden kann. Für den ersten Fall dient der vom Regler errechnete Durchschnittswert der Ist- Abstandsmaße beider Winkelsensoren als Steuersignal und im zweiten Fall deren Differenz. Da die erfindungsgemäßen Vorteile der Meßeinrichtung im Prinzip in Verbindung mit allen bekannten Hydrauliksystemen zur Erzeugung der Bewegungen des Vorsatzgerätes zum Längs- und Querkopieren wirksam werden, muß an dieser Stelle auch kein besonders geeignetes näher erläutert werden. Dabei hat es sich bewährt, die Gleitkufe des Halmteilers in ihrer Längsausrichtung von der hinteren Aufstandsfläche zur Spitze gegenüber dem Boden in einem ansteigenden Anstellwinkel als eine weitere Maßnahme gegen das Einspießen anzubringen, für dessen Größenordnung ein Bereich von 2 bis 10 Grad zu empfehlen ist. Die hierfür besonders geeignete längenveränderliche Ausbildung des Oberlenkers beispielsweise als Spannschloß bietet hierfür eine einfache Möglichkeit zur Einstellung der Gleitkufe auf diese Werte. Eine bevorzugte Ausführung der Erfindung wird darin gesehen, wenn der Gelenkpunkt des Oberlenkers am Vorsatzgerät als eine leicht lösbare Bolzen-Stecker- Verbindung ausgebildet ist, für die in Fahrtrichtung gesehen weiter hinten am Vorsatzgerät ein weiterer Gelenkpunkt zum Befestigen des Halmteilers in der Transportstellung angebracht ist. In diesem Fall ist es zweckmäßig, den Winkelsensor mit seinem Schwenkhebel wie vorstehend beschrieben mit dem Übertragungshebel am Unterlenker zu verbinden, weil dann diese Verbindung für das Hochschwenken des Halmteilers zum Erreichen einer geringeren Breite des Vorsatzgerätes auf einem Transportwagen nicht gelöst werden muß und jeder Winkelsensor diese Schwenkbewegung ohne Schaden zu nehmen ausführen kann.
In einer weiteren vorteilhaften Auführungsvariante der Erfindung wird vorgeschlagen, anstelle des Halmteilers einen Teilerbügel einzusetzen, der analog wie der Halmteiler angelenkt ist und sich ebenfalls an der gleichen Stelle wie dieser befindet. Da das der einzige Unterschied ohne Auswirkung auf die Funktion der Vorrichtung zur Bodenkopierung ist, bedarf es dazu keiner weiteren Erläuterungen.
Schließlich wird vorsorglich noch darauf verwiesen, daß der Rahmen der Erfindung auch dann nicht verlassen wird, wenn anstelle des Halmteilers bzw. des Teilerbügels eine etwas abgewandelte und gleich wirkende Einrichtung eingesetzt wird. Auch deren Verwendung an anderen Vorsatzgeräten, wie den hier beispielhaft beschriebenen Schneid- bzw. Mähwerken, fällt noch in den Schutzumfang der Erfindung, wozu insbesondere alle Arten von Aufnahmeeinrichtungen für die verschiedensten Erntemaschinen zählen.
Zusammenfassend stellen sich die Vorteile der Erfindung so dar, daß mit dieser Vorrichtung eine exakte und störungsfreie Bodenkopierung nach dem tatsächlichen Bodenprofil möglich ist, was sich insbesondere bei höheren Fahrgeschwindigkeiten der Erntemaschine vorteilhaft auswirkt. Durch das Messen genauer Abstandsmaße des Vorsatzgerätes zum Boden können auch die vorgegebenen Soll- Abstandsmaße besser eingehalten werden. Darüber hinaus sind für diese Vorrichtung zur Bodenkopierung nur einfache und bereits an der Erntemaschine vorhandene Bauteile nötig, so daß sich deren Herstellungskosten günstig gestalten.

Die Erfindung soll nun anhand von zwei Ausführungsbeispielen näher erläutert werden, wobei die einzelnen Figuren zeigen:
- Fig. 1:: eine Seitenansicht auf das Vorderteil eines schematisch dargestellten Mähdreschers mit Zuführschacht und Schneidwerk mit Halmteilern beim Bodenkopieren
- Fig. 2:: einen vergrößerter Ausschnitt vom Unterteil des Schwenkrahmens aus Fig. 1
- Fig. 3:: eine Rückansicht auf das Schneidwerk mit eingeschwenkten Halmteilern auf einem Transportwagen
- Fig. 4:: eine Seitenansicht wie Fig. 1 als zweites Ausführungsbeispiel eines Schneidwerkes mit Teilerbügeln beim Bodenkopieren
- Fig. 5:: ein elektrisch/hydraulisches Schaltbild der Vorrichtung zur Bodenkopierung.

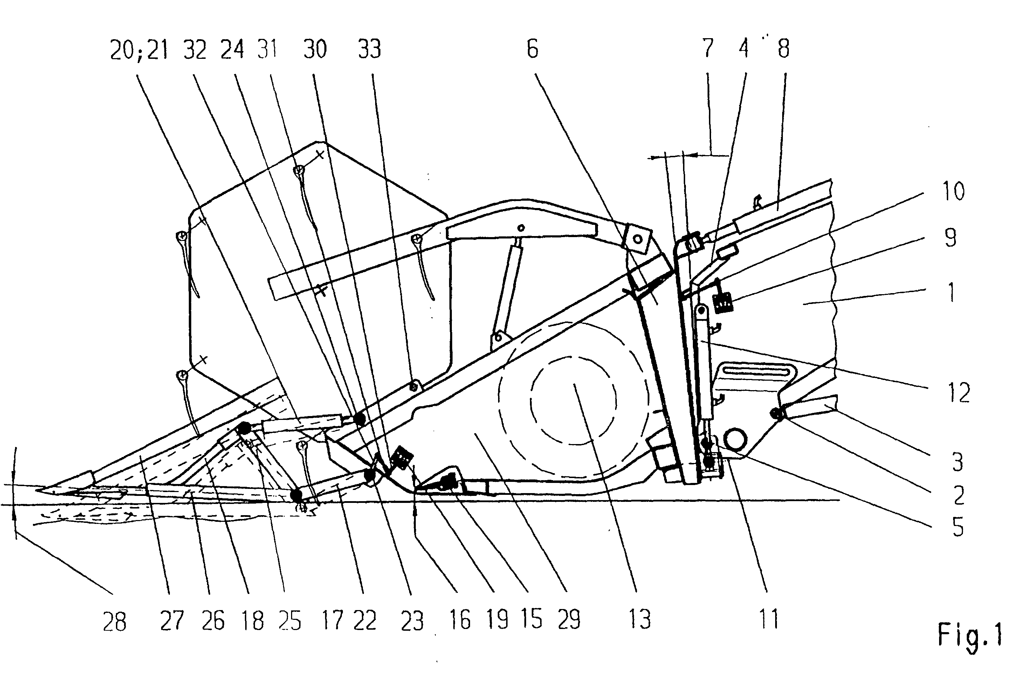

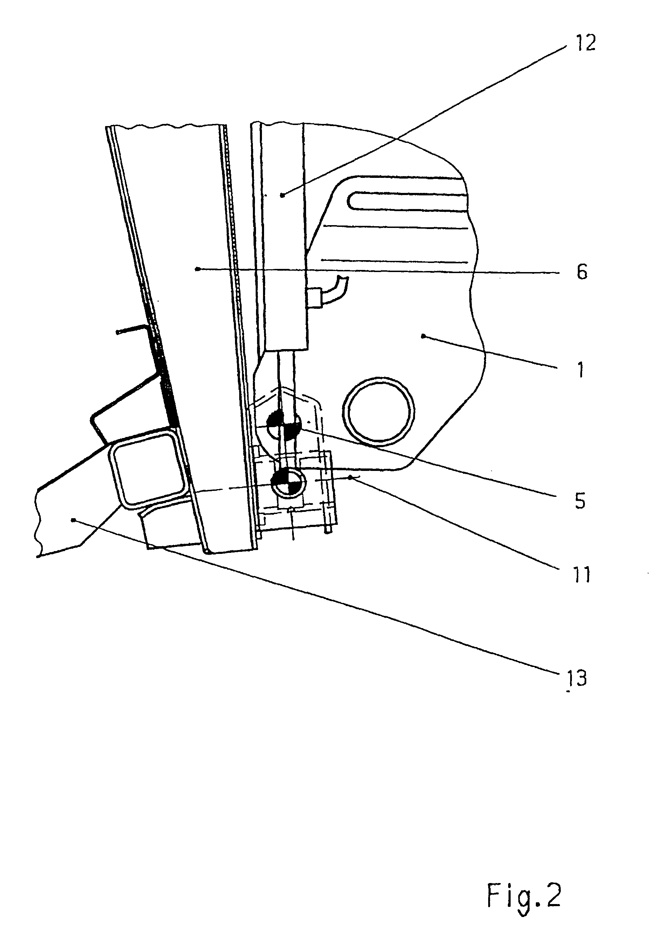

In den Figuren 1 und 2 ist die Vorrichtung zur Bodenkopierung in einem ersten Ausführungsbeispiel an einem Mähdrescher verwirklicht, der als Zuführeinrichtung 1 für das Dreschgut einen Zuführschacht aufweist, der höhenverschwenkbar am Fahrgestell befestigt ist. Dazu befinden sich zwischen dem Fahrgestell und der Unterseite des Zuführschachtes zwei in Gelenken 2 angreifende Hydraulikzylinder 3. Frontseitig ist der Zuführschacht mit einem Verstärkungsrahmen 4 ausgestattet, an dessen Unterseite sich eine quer zur Fahrtrichtung des Mähdreschers ausgerichtete Achse 5 befindet. Um diese Achse 5 ist ein Schwenkrahmen 6 gegenüber dem Verstärkungsrahmen 4 um einen definierten Schwenkwinkel 7 verdrehbeweglich angeordnet. Ein einenends mit der Oberseite des Zuführschachtes und anderenends mit dem Schwenkrahmen 6 gelenkig verbundener hydraulischer Arbeitszylinder 8 stellt zwischen ihnen die abstandsveränderliche Verbindung her. Ein seitlich am Zuführschacht befestigter Sensor 9 erfaßt mit seinem am Schwenkrahmen 6 anliegenden Tastarm 10 ständig die Größe des Schwenkwinkels 7. Außerdem ist der Schwenkrahmen 6 gegenüber dem Verstärkungsrahmen 4 um eine in Fahrtrichtung des Mähdreschers zeigende Achse 11 verdrehbeweglich aufgehängt, wofür zwischen dem Zuführschacht und dem Schwenkrahmen 6 auf deren in Fahrtrichtung gesehenen linken Seite ein vertikal stehender Hydraulikzylinder 12 gelenkig angeordnet ist.
Der Schwenkrahmen 6 ist dabei so gestaltet, daß er ein in diesem Ausführungsbeispiel als Schneidwerk ausgebildetes Vorsatzgerät 13 für die Erntemaschine schnell aufnehmen und auch wieder entweder auf dem Boden oder einem Transportwagen 14 absetzen kann. Dessen Messerbalken 15 weist beim Bodenkopieren ein Abstandsmaß 16 zum Boden auf, das auf beiden Seiten des Vorsatzgerätes 13 mit je einer Meßeinrichtung 17 ständig gemessen wird. Diese Meßeinrichtungen 17 bestehen aus höhenbeweglichen und auf dem Boden gleitenden Halmteilern 18, deren Höhenbewegung gegenüber dem Schneidwerk proportional auf die Schwenkbewegung von Winkelsensoren 19 übertragbar ist. Jeder Halmteiler 18 weist hierfür einen als Spannschloß 20 ausgebildeten Oberlenker 21 und einen einfachen Unterlenker 22 auf, die sich in einem gewissen Abstand voneinander in annähernd horizontaler Ausrichtung nach vorn erstrecken. Ihre hinteren Enden sind in Gelenkpunkten 23;24 am Schneidwerk befestigt und ihre vorderen Enden über eine Koppel 25 miteinander verbunden. An der Koppel 25 ist eine nach vorn zeigende und den Boden abtastende Gleitkufe 26 angebracht, deren Spitze den Abweiser 27 trägt und die in ihrer Längsausrichtung von der hinteren Aufstandsfläche zur Spitze gegenüber dem Boden einen Anstellwinkel 28 im Bereich von 2 bis 10 Grad aufweist.

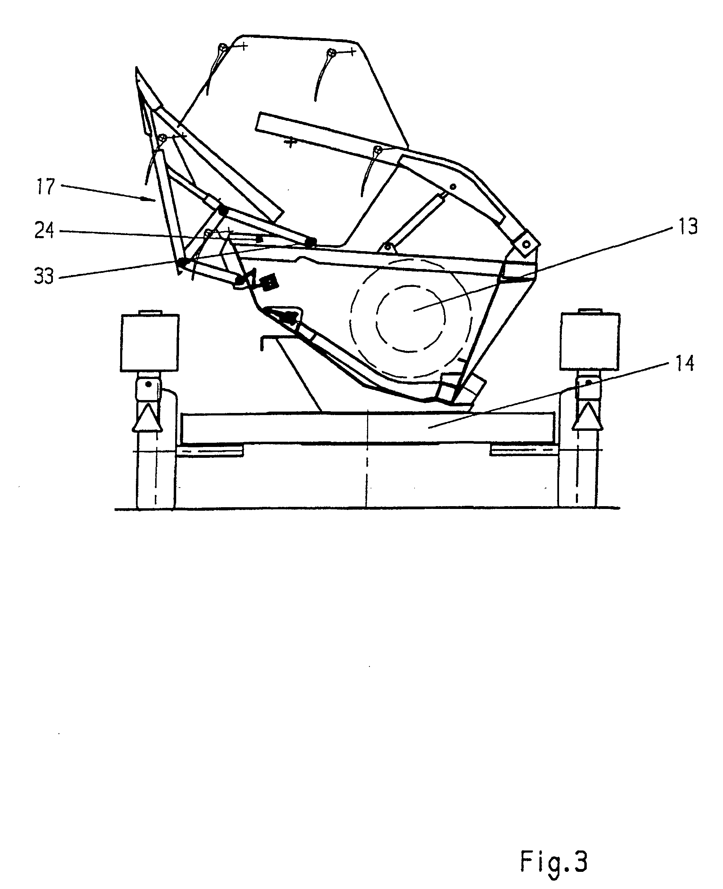

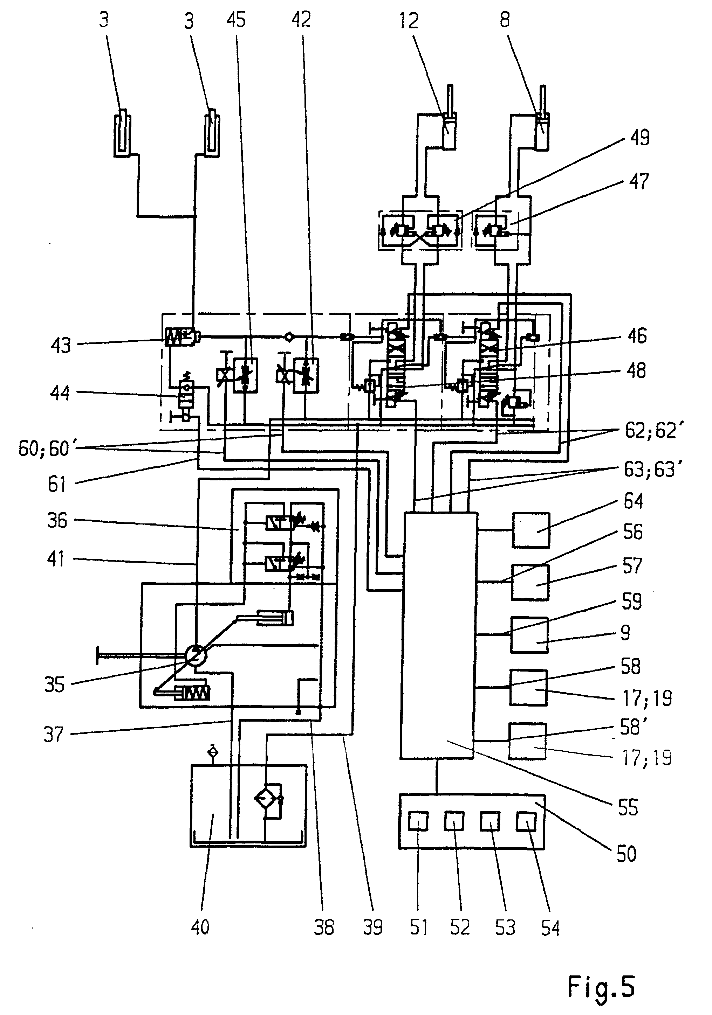

Zur Übertragung des Abstandsmaßes 16 zwischen dem Halmteiler 18 und dem Messerbalken 15 auf den Winkelsensor 19 ist letzterer an der Seitenwand 29 des Schneidwerkes befestigt. Sein Schwenkhebel 30 ist über ein Verbindungsglied 31 mit einem Übertragungshebel 32 gelenkig verbunden, der verdrehfest am Unterlenker 22 angebracht ist und gemeinsam mit diesem um dessen Gelenkpunkt 23 schwenkt.
Für den Oberlenker 21 des Halmteilers 18 ist am Schneidwerk ein weiterer Gelenkpunkt 33 vorgesehen, der zur Verkleinerung der Transportbreite des Schneidwerkes durch Hochschwenken der Halmteiler 18 auf dem Transportwagen 14 dient, wie es in Figur 3 zu sehen ist.

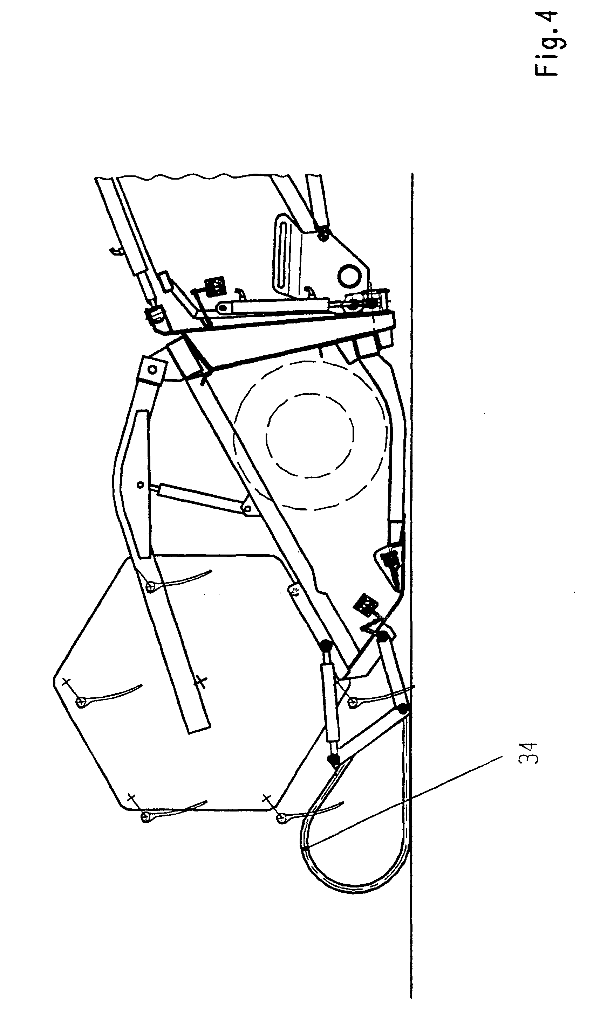

In Figur 4 ist eine etwas abgewandelte Meßeinrichtung 17 gezeigt, wo an den vorderen Enden des Oberlenkers 21 und des Unterlenkers 22 ein den Boden abtastender Teilerbügel 34 gelenkig befestigt ist.
Das elektrisch/hydraulische Schaltbild nach Figur 5 zeigt ein besonders vorteilhaftes Ausführungsbeispiel einer Vorrichtung zur Bodenkopierung, bei der die Meßeinrichtungen 17 zum Messen des Abstandsmaßes 16 des Vorsatzgerätes 13 vom Boden in Verbindung mit der Möglichkeit zur Einhaltung eines Soll- Abstandsmaßes 16 mit Hilfe von Steuer- und Bedienelementen zum Einsatz kommt. Dazu ist die Erntemaschine an geeigneter Stelle mit einer hydraulischen Verstellpumpe 35 ausgerüstet, die mit einer hydraulischen Stelleinrichtung 36 in Verbindung steht. Deren Saugleitung 37 und die Leckölleitung 38 sowie die Rücklaufleitung 39 des gesamten Hydrauliksystems enden gemeinsam im Hydraulikölbehälter 40. Ihre Druckleitung 41 ist einmal über einen Stromregler- Heben 42 und ein Logikelement 43 mit den Hydraulikzylindern 3 unter dem Zuführschacht verbunden. Andererseits besteht zwischen den Hydraulikzylindern 3 und der Rücklaufleitung 39 eine Verbindung über das Logikelement 43 und ein elektrisches Sperrventil 44 sowie einen Stromregler- Senken 45.

Zum anderen ist die Druckleitung 41 noch über ein 4/3- Wege- Proportionalventil 46 und ein einfaches Senkbremsventil 47 mit dem hydraulischen Arbeitszylinder 8 zum Längskopieren verbunden und weiterhin über ein anderes 4/3- Wege- Proportionalventil 48 und ein doppeltes Senkbremsventil 49 mit dem Hydraulikzylinder 12 zum Querkopieren.
Zum elektrischen Teil der Bodenkopierung gehört ein Bedienteil 50 zur Vorauswahl der Einsatzmöglichkeiten des Vorsatzgerätes 13, wofür eine Taste 51 zur manuellen Steuerung, eine Taste 52 für den Hochschnitt, eine Taste 53 für die Auflagedruckregelung und schließlich eine Taste 54 für die Bodenkopierung des Vorsatzgerätes 13 zur Verfügung stehen. Das Bedienteil 50 steht mit einem Regler 55 in Verbindung, der zur Ausführung der Steuer- und Rechenoperationen als Softwareregler ausgebildet ist. Er bekommt über eine Eingangsleitung 56 von einem Sollwertgeber 57 die Vorgabe eines Soll- Abstandsmaßes 16 fiir das Vorsatzgerät 13 zum Boden, über die Eingangsleitungen 58;58' die Ist- Abstandsmaße 16 von den Winkelsensoren 19 und über die Eingangsleitung 59 vom Sensor 9 die Istwerte für den Schwenkwinkel 7. Zur Ausgabe seiner Steuersignale besitzt er zum Stromregler- Heben 42 und zum Stromregler- Senken 45 führende Ausgangsleitungen 60;60' für die Hydraulikzylinder 3, eine Ausgangsleitung 61 zum elektrischen Sperrventil 44, Ausgangsleitungen 62;62' zum 4/3- Wege- Proportionalventil 46 für den hydraulischen Arbeitszylinder 8 und Ausgangsleitungen 63;63' zum 4/3- Wege-Proportionalventil 48 für den Hydraulikzylinder 12.
Außerdem ist der Regler 55 mit einem Fahrhebel 64 verbunden, von dem er für den Fall der manuellen Steuerung des Vorsatzgerätes 13 die Steuersignale erhält.

## Patentansprüche

1. Vorrichtung zur Bodenkopierung für Vorsatzgeräte an Erntemaschinen, insbesondere für Schneidwerke bzw. Mähwerke an selbstfahrenden Mähdreschern und Feldhäckslern,
◆ mit einer durch Hydraulikzylinder (3) höhenverschwenkbaren Zuführeinrichtung (1), an der frontseitig das Vorsatzgerät (13) angebracht ist,
◆ mit wenigstens einer am Vorsatzgerät (13) befestigten und dessen Abstandsmaß (16) zum Boden feststellenden Meßeinrichtung (17), die über einen Regler (55) zumindest mit dem Hydrauliksystem der Hydraulikzylinder (3) der Zuführeinrichtung (1) in Verbindung steht,
◆ mit einem zur Meßeinrichtung (17) gehörenden und auf dem Boden gleitenden sowie gegenüber dem Vorsatzgerät (13) höhenbeweglich aufgehängten Halmteiler (18), der mit einem ein elektrisches Signal erzeugenden Sensor zur Erfassung des Abstandsmaßes (16) gekoppelt ist,
**dadurch gekennzeichnet, daß**
a) der Halmteiler (18) einen Oberlenker (21) und einen Unterlenker (22) aufweist, die sich in einem gewissen Abstand voneinander in horizontaler Ausrichtung nach vorn erstrecken und deren hintere Enden in Gelenkpunkten (23;24) am Vorsatzgerät (13) befestigt sind,
b) deren vordere Enden über eine Koppel (25) miteinander verbunden sind, an der eine den Boden abtastende Gleitkufe (26) verdrehfest angebracht ist, deren Spitze (25) den Abweiser (27) trägt,
c) der Sensor der Meßeinrichtung (17) als Winkelsensor (19) ausgebildet ist, der an der Seitenwand (29) des Vorsatzgerätes (13) befestigt ist und dessen Schwenkhebel (30) über ein Verbindungsglied (31) gelenkig mit einem verdrehfest mit dem Unterlenker (22) bzw. dem Oberlenker (21) verbundenen Übertragungshebel (32) in Verbindung steht.

2. Vorrichtung nach Anspruch 1, **dadurch gekennzeichnet, daß** an jeder Seitenwand (29) des Vorsatzgerätes (13) eine Meßeinrichtung (17) angeordnet ist.

3. Vorrichtung nach den Ansprüchen 1 und 2, **dadurch gekennzeichnet, daß** die Gleitkufe (26) des Halmteilers (18) in ihrer Längsausrichtung von der hinteren Aufstandsfläche zur Spitze gegenüber dem ebenen Boden einen Anstellwinkel (28) im Bereich von 2 bis 10 Grad aufweist.

4. Vorrichtung nach den Ansprüchen 1 bis 3, **dadurch gekennzeichnet, daß** der Oberlenker (21) als längenveränderliches Spannschloß (20) ausgebildet ist.

5. Vorrichtung nach den Ansprüchen 1 bis 4, **dadurch gekennzeichnet, daß** der Gelenkpunkt (24) im hinteren Ende des Oberlenkers (21) als leicht lösbare Bolzen- Stecker- Verbindung ausgebildet ist, für den am Vorsatzgerät (13) ein weiterer und in Fahrtrichtung gesehen nach hinten versetzter Gelenkpunkt (33) angebracht ist.

6. Vorrichtung nach den Ansprüchen 1 und 2, **dadurch gekennzeichnet, daß** an den Seitenwänden (29) des Vorsatzgerätes (13) je ein Oberlenker (21) und ein Unterlenker (22) mit ihren hinteren Enden in Gelenkpunkten (23;24) befestigt sind, die sich in einem gewissen Abstand voneinander in horizontaler Ausrichtung nach vorn erstrecken und deren vordere Enden durch je einen den Boden abtastenden Teilerbügel (34) gelenkig miteinander verbunden sind.

## Claims

1. A device for ground copying for attachments to harvesting machines, in particular for cutting attachments or reapers on self-propelled combine harvesters and forage harvesters,
◆ with a feeder device (1) the height of which is varied by tilting by means of a hydraulic cylinder (3), fixed to the front of the attachment (13,
◆ with at least one measuring device (17) fixed to the attachment (13) for determining its distance (16) to the ground, which is connected via a controller (55) at least with the hydraulic system of the hydraulic cylinder (3) of the feeder device (1),
◆ with a stem divider (18) suspended on the attachment (13) so that its height can be varied belonging to the measuring device (17) and sliding on the ground opposite the attachment (13), which is coupled with a sensor producing an electrical signal for recording the distance (16),
**characterised in that**
a) the stem divider (18) exhibits an upper connecting rod (21) and a lower connecting rod (22), which extend at a certain distance from each other in a horizontal direction forwards and their rear ends are fixed in articulation points (23;24) on the attachment (13),
b) the front ends of which are joined to each other with a connecting rod (25), on which is attached a skid (26) for feeling the ground such that it cannot twist, the point (25) of which bears the deflector (27),
c) the sensor of the measuring device (17) is designed as an angular sensor (19), which is fixed on the side wall (29) of the attachment (13) and its tilting lever (30) is joined via a connecting member (31) flexibly with the lever (32) which is connected to the lower connecting rod (22) and the upper connecting rod (21) so that it cannot twist.

2. A device in accordance with claim 1, **characterised in that**, on each side wall (29) of the attachment (13) a measuring device (17) is arranged.

3. A device in accordance with claims 1 and 2, **characterised in that**, the skid (26) of the stem divider (18) in its longitudinal direction from the rear contact surface to the tip exhibits an angle of attack (28) in the range from 2 to 10 degrees in relation to the level ground.

4. A device in accordance with claims 1 to 3, **characterised in that**, the upper connecting rod (21) is designed as a turnbuckle (20) of variable length.

5. A device in accordance with claims 1 to 4, **characterised in that**, the articulation point (24) in the rear end of the upper connecting rod (21) is designed as an easily separable bolt-plug connection, for a further articulation point (33) fixed to the attachment (13) displaced to the rear viewed in the direction of travel.

6. A device in accordance with claims 1 and 2, **characterised in that** on the side walls (29) of the attachment (13) there are fixed on each side an upper connecting rod (21) and a lower connecting rod (22) with their rear ends fixed in articulation points (23;24), which at a certain distance from each other extend forwards in a horizontal direction and their front ends are connected with each other flexibly by the divider hoop (34) feeling the ground.

## Revendications

1. Dispositif de copiage du sol pour outils adaptables sur des machines de récolte, en particulier pour des barres de coupe montées sur des moissonneuses-batteuses et des récolteuses-hacheuses automotrices,
◆ avec un dispositif d'amenée (1) à hauteur réglable par des cylindres hydrauliques (3), sur la partie avant duquel l'outil adaptable (13) est monté,
◆ avec au moins un dispositif de mesure (17) fixé sur l'outil adaptable (13) et mesurant sa distance (16) par rapport au sol, qui est relié à l'aide d'un régulateur (55) au moins avec le système hydraulique des cylindres hydrauliques (3) du dispositif d'amenée (1),
◆ avec un déchaumeur (18) suspendu à hauteur réglable faisant partie du dispositif de mesure (17) et glissant sur le sol de même que vis-à-vis de l'outil adaptable (13), déchaumeur qui est couplé à un capteur générant un signal électrique pour la saisie de la distance de mesure (16), **caractérisé en ce que**
a) le déchaumeur (18) présente un bras oscillant supérieur (21) et un bras oscillant inférieur (22) qui s'étendent vers l'avant en sens horizontal à une certaine distance l'un de l'autre et dont les extrémités arrières sont fixées en des points d'articulation (23 ; 24) sur l'outil adaptable (13),
b) dont les extrémités avant sont reliées mutuellement par une bielle (25) sur laquelle un patin de glissement palpant le sol (26) est disposé sans tourner, dont la pointe (25) porte le déflecteur (27),
c) le capteur du dispositif de mesure (17) à la forme d'un capteur d'angle (19) qui est fixé sur la paroi latérale (29) de l'outil adaptable (13) et dont le levier de pivotement (30) est en liaison avec un levier de transfert (32) relié de manière fixe avec le bras oscillant inférieur (22) ou le bras oscillant supérieur (21) par l'intermédiaire d'un élément de liaison (31) de manière à pivoter.

2. Dispositif selon la revendication 1, **caractérisé en ce qu'**un dispositif de mesure (17) est disposé sur chaque paroi latérale (29) de l'outil adaptable (13).

3. Dispositif selon les revendications 1 et 2 **caractérisé en ce que** le patin coulissant (26) du déchaumeur (18) présente dans son sens longitudinal depuis la surface d'appui arrière jusqu'à la pointe par rapport au sol plan un angle de contact (28) dans un domaine de 2 à 10 degrés.

4. Dispositif selon les revendications 1 à 3, **caractérisé en ce que** le bras oscillant supérieur (21) à la forme d'un manchon de serrage (20) de longueur variable.

5. Dispositif selon les revendications 1 à 4 **caractérisé en ce que** le point d'articulation (24) à l'extrémité arrière du bras oscillant supérieur (21) a la forme d'un assemblage fiches-goujons facilement desserrable, un autre point d'articulation (33) décalé vers l'arrière considéré dans le sens de la marche étant monté sur l'outil adaptable (13).

6. Dispositif selon les revendications 1 et 2, **caractérisé en ce que**, sur les parois latérales (29) de l'outil adaptable (13) un bras oscillant supérieur (21) et un bras oscillant inférieur (22) sont fixés par leurs extrémités arrière dans les points d'articulation (23 ; 24) qui s'étendent vers l'avant en sens horizontal à une certaine distance l'un de l'autre et dont les extrémités avants sont reliées l'une à l'autre à articulation par un étrier diviseur (34) palpant le sol.
